# EUROPEAN PATENT SPECIFICATION

(11) **EP 2 685 835 B1**
(45) Date of publication and mention of the grant of the patent: **03.05.2017**
(21) Application number: 12711460.1
(22) Date of filing: 13.03.2012
(51) Int. Cl.: A23B 4/10, A23B 4/20, A23B 4/22, A23L 3/3463, A23L 3/3481, B32B 27/18, B32B 27/32, B65D 81/28, C08J 5/18, B65D 65/40, B32B 33/00, B32B 37/15

(54) **PROCESS FOR OBTAINING A FILM THAT COMPRISES THE INCORPORATION OF NATURAL ANTIMICROBIAL AGENTS IN A POLYMERIC STRUCTURE**
VERFAHREN ZUR HERSTELLUNG EINER FOLIE MITTELS INTEGRATION VON NATÜRLICHEN ANTIMIKROBIKA IN EINER POLYMERSTRUKTUR
PROCÉDÉ D'OBTENTION D'UN FILM QUI COMPREND L'INCORPORATION D'AGENTS ANTIMICROBIENS NATURELS DANS UNE STRUCTURE POLYMÈRE

(30) Priority: 14.03.2011 CL 5322011
(43) Date of publication of application: 22.01.2014
(73) Proprietor: Universidad De Santiago De Chile, CP 9170022, Estación Central Santiago (CL)
(72) Inventor: GUARDA, Abel, Santiago (CL); VALENZUELA, Ximena, Santiago (CL); RAMIREZ, Alberto, Santiago (CL); GALOTTO, María Jose, Santiago (CL)
(74) Representative: Grünecker Patent- und Rechtsanwälte PartG mbB
(86) International application number: PCT/IB2012/051191
(87) International publication number: WO 2012/123901

(56) References cited:
- EP-A1- 0 423 604
- WO-A1-00/03930
- WO-A1-2006/000032
- WO-A1-2010/006710
- WO-A2-2010/057658
- WO-A2-2012/007505
- CN-A- 101 791 890
- CN-B- 101 367 283
- CN-B- 101 492 555
- JP-A- 4 173 244
- JP-A- 2001 026 068
- JP-A- 2002 036 466
- JP-A- 2003 192 916
- JP-A- 2003 321 070
- KR-B1- 100 302 831
- US-A1- 2006 013 884
- LIU CHIA-LING ET AL: "Development and application of antibacterial packaging film with zinc oxide", TAIWANESE JOURNAL OF AGRICULTURAL CHEMISTRY AND FOOD SCIENCE, vol. 44, no. 6, 1 December 2006 (2006-12-01), pages 397-402, XP008152679, ISSN: 1605-2471
- JUNG-UK HA ET AL: "Multilayered antimicrobial polyethylene films applied to the packaging of ground beef.", PACKAGING TECHNOLOGY & SCIENCE, vol. 15, 2001, pages 55-62, XP002677647,
- SANDMEIER D ET AL: "Wirkstoff-Folien- [Active substance films.]", LEBENSMITTELTECHNIK, HAMBURG, DE, vol. 35, no. 9, 1 January 2003 (2003-01-01), pages 52-53, XP008152671, ISSN: 0047-4290
- ABEL GUARDA ET AL: "The antimicrobial activity of microencapsulated thymol and carvacrol", INTERNATIONAL JOURNAL OF FOOD MICROBIOLOGY, vol. 146, no. 2, 11 February 2011 (2011-02-11), pages 144-150, XP028159015, ISSN: 0168-1605, DOI: 10.1016/J.IJFOODMICRO.2011.02.011 [retrieved on 2011-02-18]

## Description

### TECHNICAL FIELD OF THE INVENTION

The present invention relates to a process for obtaining a film that includes the incorporation of natural antimicrobial agents in a polymeric structure for the development of packages designed to increase the shelf life of frozen meat, preferably fresh refrigerated or chilled salmon. In the present invention, the incorporation of the active ingredient is carried out through a first extrusion process which allows to obtain a pellet (masterbatch) followed by a second co-extrusion which allows the incorporation of the masterbatch into the inner face of the film which is in direct contact with the food.

### BACKGROUND OF THE INVENTION

In recent decades there has been a great technological development in food packaging, to satisfy the demands of consumers, about conservation methods and more natural ways to control the packaging and storage, to ensure quality and safety food. Among the most interesting innovations in this field, are active packaging techniques, with which it is intended that the packaging has an interactive feature, besides being a physical barrier between the product and its environment, building interactions between the container and the benefit of improving food quality, acceptability and safety. European Parliament Regulation CE No. 1935/2004 defines for the first time active packaging materials, such as those intended to extend the shelf life or to maintain or improve the condition of packaged food, and are designed to deliberately incorporate components that would transmit substances to the packaged food or to the environment surrounding the food or to absorb substances from the packaged food or the environment thereof.

But undoubtedly, active packaging technology that gets the most attention is the antimicrobial active packaging. As is well known, the growth of microorganisms is the main cause of deterioration of fresh food. The growth of spoilage microorganisms reduces the shelf life of food, while the growth of pathogens endangering health. The use of antimicrobial packaging favors the release of substances that inhibit the growth of microorganisms on the surface of the food. The antimicrobial action in active packaging can be based on the emission of volatiles to the headspace of the container or the migration of the active component of the packaging material to the surface of the packed food.

In the state of the art, there are several procedures for the incorporation of antimicrobial compounds into a film container. For example document WO 2006/000032 (Miltz et al.) Published in January 5, 2006, discloses an antimicrobial packaging material for foods containing 0.05% to 1.5% by weight of a natural essential oil. The oil can be selected from (linalool) linalol and/or methyl chavicol, but also one or more of citral, geraniol, methyl cinnamate, methyl eugenol, 1.8-cineole, trans-α-bergamotene, carvacrol and thymol mixed with one or more polymers selected from copolymers selected from, ethylene vinyl alcohol, polyacrylates, methacrylate copolymers, including methyl acrylate, ethyl ionomers, nylon and other polymers or polymers possessing hydrophilic functional groups, capable of partially anchoring the additives and the mixture of a binder or ligand is coated on the face of the film contacting the food packaging or is incorporated into a food packaging film. A binding agent such as polyethylene glycol is added to the mixture to improve the retention of volatile oil in the polymer during the process. This material has no regulatory constraints, and the concentrations referred to, do not generate undesirable flavors in the product being packed.

Document WO 2010/006710 (Yildirim et al.) Published on January 21, 2010, discloses a packing film for producing a container using a substrate of one or more layers and an antimicrobial and/or a functional layer of antifungal applied to the substrate, and forming an outer layer of a packaging film of at least two segments. According to what is reported in that document, the functional layer comprises particles such as antimicrobial agents and/or antifungal active substances.

The document WO 2010/057658 (Del Nobile et al.) Published on May 27, 2010, discloses a method for producing a film of thermoplastic material, particularly of low density polyethylene, incorporating substances with antimicrobial activity, comprising the steps of:
a) Mixing at a temperature exceeding 160°C, a thermoplastic polymer which has a melting point exceeding 160°C and at least one substance with antimicrobial activity selected from the group consisting of lysozyme, thymol and lemon extract,
b) Subjecting the mixture obtained in step a) to a compression at the same temperature as indicated above,
c) Cooling under compression to a temperature exceeding 40° C, resulting in strips, which are divided into short pieces;
d) Feeding short pieces into an extruder equipped with a matrix or nozzle, and heating means for the operating temperature is within a value less than or equal to, 160°C, and
e) Making a film extrusion through the matrix.

The three documents described above, report the process of incorporating antimicrobial agents into a plastic film. However, the present invention proposes the incorporation of antimicrobial agents in a much simpler way than the ways disclosed in the prior art.

JP 04-173244 discloses a plastic film into which a porous mineral modified with metals is incorporated to increase the antimicrobial capacity of the film.

CN 101492555 discloses a method for preparing an antibacterial self-cleaning polyolefin packing film obtained by a three-layer co-extrusion technique and comprising three layers, of which the surface layer comprises an antibacterial agent and the middle interlayer comprises m-LLDPE.

CN 1011367283 discloses a process for preparing an antibacterial polyethylene film consisting of an outer layer, a middle layer and an inner layer, wherein the inner layer comprises low density polyethylene and an antibacterial agent.

CN 101791890 discloses a method for manufacturing an antibacterial film comprising an upper, middle and lower layers, wherein the upper layer is an antibacterial agent layer comprising, in addition to the antibacterial agent, linear low density polyethylene. The antibacterial film is prepared by a three-layer co-extrusion.

KR 100 302 831 describes the procedure for incorporating a mineral compound with modified characteristics by means of its dissolving in wax and its later incorporation as a monolayer masterbatch material.

JP 2002-036466 discloses a method for manufacturing an antibacterial polyolefinic sheet having a multilayered structure including outer layers comprising polypropylene resin and an antibacterial agent. The sheet also contains a middle polyolefinic resin layer, which may contain low density polyethylene.

JP 2003-192916 discloses a method for preparing an antibacterial film comprising a thermoplastic resin and an antibacterial agent which is obtained by melt kneading the antibacterial agent with the thermoplastic resin and extruding the mixture to obtain a film.

JP 2003-321070 discloses a method for preparing an antibacterial film comprising an olefin polymer and an antibacterial agent, which is prepared by kneading and extruding the antibacterial agent with the olefin polymer.

US 2006/0013884 discloses a method for preparing an antibacterial multilayer synthetic resin bag comprising the steps of obtaining a master batch by mixing an antibacterial powdery composition and a polyethylene resin and laminating the mixture on a polyester film by extrusion using a T die.

JP 2001-026068 discloses an antibacterial film comprising an antibacterial resin layer containing a dicarboxylic acid component and a glycol component as main constituents and, in addition thereto, a polyester resin.

### SUMMARY OF THE INVENTION

For the salmon marketed as fresh and refrigerated, its main cause and mechanism for deterioration is the growth of microorganisms on its surface, this being the main cause of its short life.

There is a possibility of using volatile natural compounds with antimicrobial properties that can be incorporated into the package, but it is necesary to determine the appropriate mechanism for incorporating these agents in the plastic structure so as to exert its function directly on the food surface, maintaining this function during the time the product will be packed and stored.

The present invention relates to processes for obtaining a film that includes the incorporation of natural antimicrobial agents in a polymeric structure for the development of packages designed to increase the shelf life of refrigerated meat, preferably fresh refrigerated salmon.

The active agent with antimicrobial activity, is incorporated by a double extrusion process of the polymer material. The first extrusion yields a pellet (masterbatch) which is obtained by extruding a mixture of the active agent with low density polyethylene powder, and a second extrusion the film is obtained incorporating the masterbatch in an appropriate proportion of polyethylene pellets.

The film which will be used to obtain the packing bag is obtained by a coextrusion process. The material has three layers, where only the inner layer in direct contact with the salmon, and is where the masterbatch containing the active compound, is added.

Therefore, the main objective of the present invention is to provide a system incorporating natural antimicrobial agents in a polymeric structure for the development of packages destined to increase the shelf life of refrigerated fresh salmon.

The above objective is achieved by the process of appended claim 1.

Preferred embodiments of the present invention are set forth in the dependent claims.

### BRIEF DESCRIPTION OF THE DRAWINGS

The accompanying drawings are included to provide a better understanding of the invention.
Figure 1 shows a diagram of the multilayer structure of the film developed.
Figure 2 shows a graph of counts in time, of mesophilic aerobes (RAM) at various temperatures (°C) in a packed product with the antimicrobial package and the same product packed in a traditional plastic without antimicrobial agents (control container).
Figure 3 shows a graph of counting time of psychrophilus microorganisms at different temperatures (°C degrees centigrade) in a packed product with antimicrobial packaging and the same product packed with traditional plastic packaging without antimicrobial agents (control container).
Figure 4 shows a graph of counting time, pseudomonas at 4°C, in a packaged product with antimicrobial packaging and the same product packed with traditional plastic packaging without antimicrobial agents (control container).
Figure 5 shows a logarithmic graph of the life of the film with the natural antimicrobial agent, with reference to storage temperature.
Figure 6 shows a graph of the life of the film with the natural antimicrobial agent, with reference to storage temperature.

### DESCRIPTION OF THE INVENTION

The present invention relates to processes for obtaining a film that includes the incorporation of natural antimicrobial agents in a polymeric structure, for the development of packages designed to increase the shelf life of refrigerated meat, preferably fresh chilled salmon.

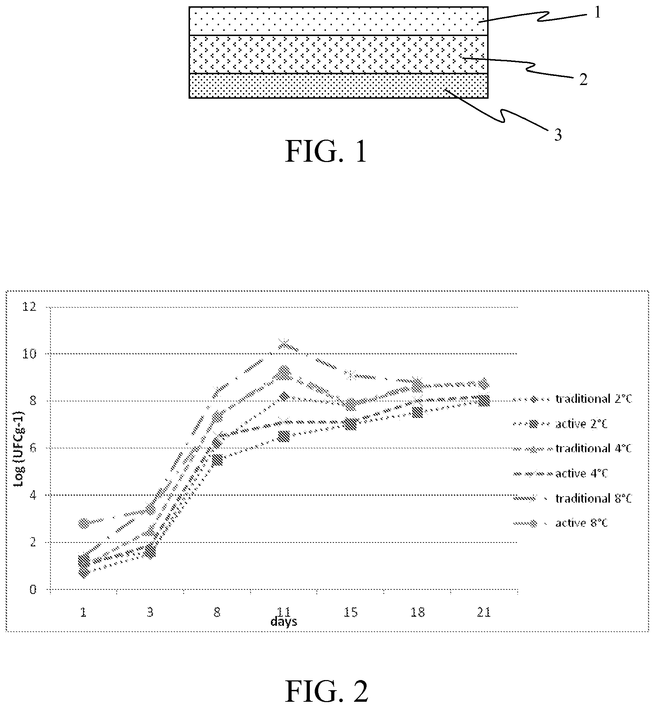

In a first extrusion a pellet (masterbatch) is obtained by extruding a mixture of active agent with low density polyethylene powder, and in a second extrusion the film incorporating the masterbatch in the ratio of 10% polyethylene pellets, is obtained. The incorporation of natural antimicrobial was made using a mix (in a pants-type mixer-blender) after the antimicrobial agent with the powder for the preparation of the corresponding Masterbatch. The development of the film on which the antimicrobial agent was incorporated, was carried out in a three-layer flat head co-extruder (cast). In this case we optimized the incorporation of the active agent, so that only the active agent incorporated in the layer of film which will later be the inner face of the container and therefore in direct contact with the salmon, while the intermediate and outer layers, provide the other requirements of the film structure and do not require the incorporation of the active agent. According to what is shown in Figure 1, the developed structure therefore includes an outer layer (1) of LDPE with a final thickness of 8 microns, which represents 25% of the total thickness of the film, a second intermediate layer (2) 15 microns thick and represents 50% of the film, consisting of LDPE, and a third inner layer (3), consisting of 90% LDPE and 10% of the active agent.

### i) Masterbatch preparation

The masterbatch preparation was made with thymol as an antimicrobial agent, thymol powder mixture at different concentrations (2.8%, 5%, 10% and 15%), with linear low density polyethylene powder and extruded to obtain the masterbatch. The extrusion temperature was about 170°C (in the head and other parts of the screw).

### ii) Production of natural antimicrobial film with direct extrusion

The masterbatch containing 10% of antimicrobial agent, mixed with LDPE at different concentrations in a masterbatch extruder with concentrations between 0.5 and 15%.

### iii) Determination of the quantity of effective natural AM in films after the extrusion process.

To determine the quantity of natural AM remaining in the films after the extrusion process, the final concentration was determined by solvent extraction from the plastic. This extraction was performed and subsequent quantification by HPLC (Shimatzu brand) with UV detection. Determined that the loss of antimicrobial extrusion varies between 80 and 90%

### iv) Determination of antimicrobial capacity of films

The antimicrobial effectiveness of the films, was evaluated according to ASTM E-2149, which quantifies the rate of microbial reduction caused by the material under study against a control reference. The antimicrobial capacity of the different films was determined against target microorganisms which were *Listeria innocua* as a representative of the microorganisms (Gram+) and *Escherichia coli* as a representative of the microorganisms (Gram-). Table 1 shows the antimicrobial capacity of the developed films, observing that after 24 hours a reduction of 100% of *E. coli* is produced, provided that the nominal concentration of antimicrobial in the film is more than 10%, which represents a real concentration in the film of approximately 0.72%. Similar results were obtained for the case of *L. innocua,* although this case requires a final effective concentration in the film of only 0.46% (Table 3).

**Table 3.- Microbian reduction against E.Coli and L. innocua after 3 and 24 hours.**

| **Nominal concentration (%)** | **Real Concentration (%)** | **Reducc. 3 Hours (E Coli)** | **Reducc 24 Hours (E Coli)** | **Reducc 3 Hours (L innoc)%** | **Reducc 24 hrs (L innoc)%** |
|---|---|---|---|---|---|
| 2,8 | 0,18 | 0 | 0 | 0 | 0 |
| 5 | 0,46 | 0 | 0 | 0 | 99.7 |
| 10 | 0,72 | 0 | 100 | 0 | 99.5 |
| 15 | 0,8 | 0 | 100 | 0 | 99.8 |

### Determination of the quality of packed fresh salmon in an antimicrobial active packaging bag.

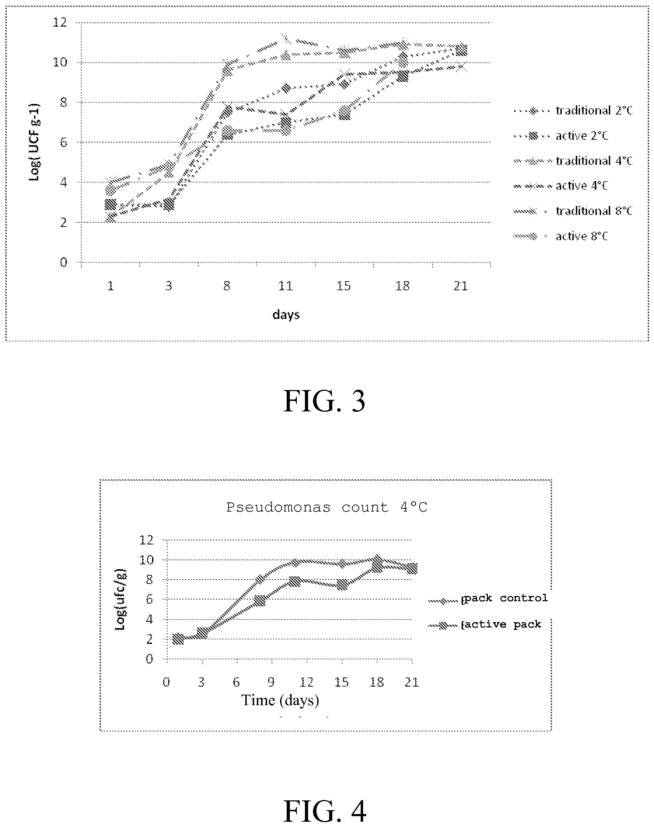

The purpose of this analysis is the evaluation of the presence of microorganisms which deteriorate the fresh salmon meat, for this purpose samples were stored under temperatures of 2,4,8 and 10 degrees centigrade for 21 days, samples were analysed after 1,3,8,11,15,18 and 21 days of storage. With reference to the microorganisms, it was determined: a count of aerobic mesofiles,(RAM) psicofils count and also of pseudomonas (Figures 2 to 4).

According to the Food Health Regulations aerobic mesofiles cannot exceed the United Nations Maximum of 10^6 (cfu / g), which is a 6.Log (cfu / g) In agreement with this paragraph useful lives regulation temperature refrigeration are the following:

| **Temperature** | **VU pack control** | **VU active pack** |
|---|---|---|
| **2°C** | **7,6 days** | **9,4 days** |
| **4°C** | **6,4 days** | **8,0 days** |
| **8°C** | **5,4 days** | **6,4 days** |
| **10°C** | **4,4 days** | **5,6 days** |

In parallel, the determination of the chemical characteristics of the packaged product (not volatile bases nitrogen) was analyzed.

In order to perform this analysis, samples were stored at temperatures 2, 4, 8 and 10 °C,and samples were taken and analyzed after 1, 3, 8, 11, 15, 18, 21 days of storage. With obtained data curves were plotted, when the compound BNVT is expressed in mg/100g in time. The amount of 30mg BNVT/100g was used up to (where the useful life is used up). Regarding BNVT analysis as it can be seen, there is a difference between samples packaged with control (traditional packaging) and active packaging, having the antimicrobial active packaging a longer shelf-life than the control packaging, being this difference higher as lower is the temperature.

Sensorial analysis were carried out with samples that were stored at different temperatures, and analysed were also carried out at 2,4,8,10°C. Samples were analyzed after 1,3,8,11,15,18 and 21days of storage.

### Evaluation Method:

1. **Place and conditions:** samples were transferred in aseptic bags to a place with enough light, where the assessment was carried out with surgical gloves to avoid cross contamination of samples.
2. **Rating:** Trained panelists worked in a focus group dynamics, by agreement, selecting the most representative score for each parameter measured. Considering that there are 5 different parameters that have been measured, and the maximum score is 3 per parameter.
3. Scorecard: The score card is suitable for fish in general, and is as follows:

| **SENSORIAL ANALYSIS** | | | | |
|---|---|---|---|---|
| **Parameter** | **Points 3** | **Points 2** | **Points 1** | **Points 0** |
| **General appearence** | Acceptable | Normal | Bad | Rejected |
| **Color-skin** | Brilliant Iridescent, no discolouring, transparent aqueous mucus | Brilliant pigmentation not lustrous, mucous slightly dull | Pigments in process of decolouring, milky mucous | Low pigmentation dull mucous |
| **Color-flesh** | Transparent Soft, brilliant, no color change | Velvety, pale slight change in color | Slightly dull | Dull |
| **Condition of the meat** | Firm elastic soft surface | Slightly elastic | Flaxid non elastic pale | Soft, the meat easily comes off the skin, floury and a little wrinkled |
| **Aroma** | Sea smell | No sea smell or other disagreeable smell | Slight smell of decomposition | Decomposed |

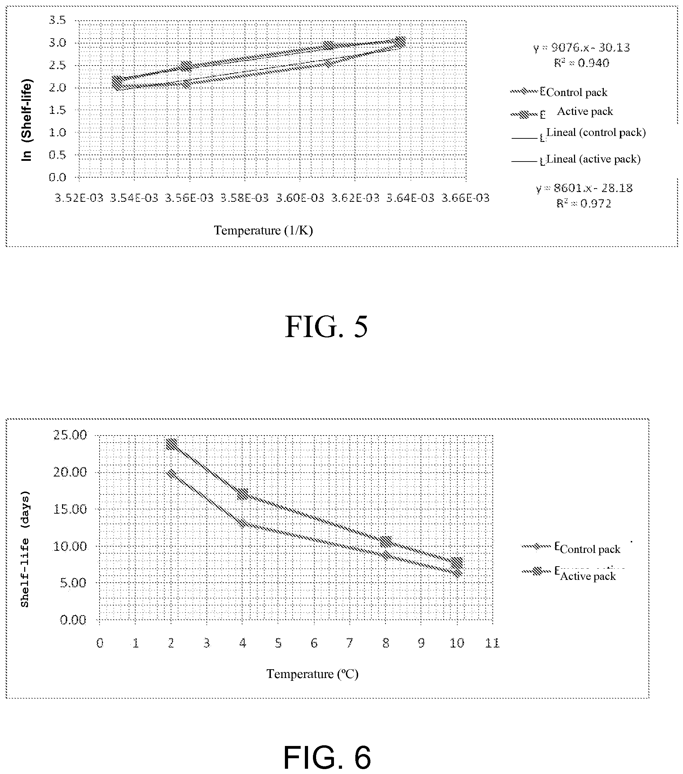

With the results we estimated the shelf-life at different temperatures to which samples were stored, then these results were adjusted to the Arrhenius model to obtain the relationship, in relation to the life span according to the storage, obtaining the results shown in figures 5 and 6.

**Arrhenius model, useful life = A*exp (-Ea/R*T)**

| | **Control packaging** | | |
|---|---|---|---|
| | **Temp (°C)** | In (Shelf-life) | **Shelf-life** |
| 19.4 | **2** | 2,87363636 | **17.7** |
| | **3** | 275.405.797 | **15.7** |
| 12.6 | **4** | 263.534.296 | **13.9** |
| | **5** | 251.748.201 | **12.4** |
| | **6** | 240.046.595 | **11.0** |
| | **7** | 228.428.571 | **9.8** |
| 8 | **8** | 216.893.238 | **8.7** |
| | **9** | 205.439.716 | **7.8** |
| 7.6 | **10** | 194.067.138 | **7.0** |

| | **ACTIVE PACKING** | | | |
|---|---|---|---|---|
| | **Temp (°C)** | In (shelf-life) | shelf-life | Active-control |
| 20,6 | **2** | 309.636.364 | 22.1 | 4.4 |
| | **3** | 298.304.348 | 19.7 | 4.0 |
| 18,8 | **4** | 287.054.152 | 17.6 | 3.7 |
| | **5** | 275.884.892 | 15.8 | 3.4 |
| | **6** | 264.795.699 | 14.1 | 3.1 |
| | **7** | 253.785.414 | 12.7 | 2.8 |
| 11,8 | **8** | 242.854.093 | 11.3 | 2.6 |
| | **9** | 2.32 | 10.2 | 2.4 |
| 8,6 | **10** | 221.222.615 | 9.1 | 2.2 |

It can be seen, that the difference in results at the sensory level, that occurs between the active packaging and control packaging, which correlates in a very good way with the results of the chemical analysis shown above, as shown in the chemical results, the difference between the active packaging and packaging control decreases with increase of the temperature. At 2°C you can see a difference of more than 4 days, which is very significant for the purposes of the project, making possible the extension of the shelf life of the product.

## Claims

1. A process for obtaining a film that comprises the incorporation of natural antimicrobial agents in a polymeric structure for the development of packages designed to increase the shelf life of chilled or refrigerated meat, preferably fresh chilled salmon, **CHARACTERIZED in that** said process comprises the following steps:
a) mixing a first extrusion of the antimicrobial active agent with low density polyethylene (LDPE) powder to obtain a pellet;
b) a second extrusion to obtain a film incorporating the pellet obtained in step (a) in a proportion of 10% polyethylene pellets;
c) conducting a three-layer coextrusion to develop the film into which the antimicrobial agent is incorporated, wherein the antimicrobial active agent is incorporated into the film layer which is in direct contact with salmon, and the intermediate and the outer layers of the film, provide the requirements for the film structure, without the incorporation of the active agent.

2. The process according to claim 1, **CHARACTERIZED in that** the antimicrobial agent incorporated in step (a) is thymol.

3. The process according to claim 1 or 2, **CHARACTERIZED in that** the outer layer is composed of LDPE and has a final thickness corresponding to 25% of the total thickness of the film.

4. The process according to claim 3, **CHARACTERIZED in that** the intermediate layer has a thickness which represents 50% of the total thickness of the film, and is composed of LDPE.

5. The process according to claim 4, **CHARACTERIZED in that** the third inner layer is composed of 90% LDPE and 10% active agent.

6. The process according to claim 1, **CHARACTERIZED in that** the incorporation of an antimicrobial agent is made by mixing in a pant type mixer homogenizer, after mixing the antimicrobial agent with the powder corresponding to the elaboration of masterbatch.

7. The process according to claim 6, **CHARACTERIZED in that** the masterbatch is prepared with thymol as an active antibacterial agent, wherein the powdered thymol is mixed in a range which varies from 2.8 to 15%, with powdered linear low density polyethylene, extruding the mixture until the masterbatch is obtained.

8. The process according to claim 7, **CHARACTERIZED in that** the extrusion temperature is around 170°C.

9. The process according to any one of claims 1, 6, 7 and 8, **CHARACTERIZED in that** in step (a) the masterbatch has a content of 10% of antimicrobial agent, which is mixed with LDPE in different concentrations comprised between 0.5 and 15% in an extruder.

## Patentansprüche

1. Verfahren zum Erhalten einer Folie, welches die Einarbeitung von natürlichen antimikrobiellen Wirkstoffen in eine polymere Struktur umfasst, für die Entwicklung von Packungen, die dazu bestimmt sind, die Lagerdauer von gekühltem oder tiefgekühltem Fleisch, vorzugsweise frischem gekühlten Lachs, zu erhöhen, **dadurch gekennzeichnet, dass** das Verfahren die folgenden Schritte umfasst:
a) Mischen einer ersten Extrusion des antimikrobiellen Wirkstoffs mit Pulver von Polyethylen niedriger Dichte (LDPE), um ein Pellet zu erhalten;
b) eine zweite Extrusion, um eine Folie zu erhalten, wobei das in Schritt (a) erhaltene Pellet in einem Anteil von 10 % Polyethylen-Pellets eingearbeitet ist;
c) Durchführen einer Dreischichten-Coextrusion, um die Folie zu entwickeln, in die der antimikrobielle Wirkstoff eingearbeitet ist, wobei der antimikrobielle Wirkstoff in die Folienschicht eingearbeitet ist, welche in direktem Kontakt mit Lachs ist, und die Zwischenschicht und die Außenschicht der Folie die Anforderungen an die Folienstruktur bereitstellen, ohne die Einarbeitung des Wirkstoffs.

2. Verfahren gemäß Anspruch 1, **dadurch gekennzeichnet, dass** der in Schritt (a) eingearbeitete antimikrobielle Wirkstoff Thymol ist.

3. Verfahren gemäß Anspruch 1 oder 2, **dadurch gekennzeichnet, dass** die Außenschicht aus LDPE zusammengesetzt ist und eine Enddicke aufweist, die 25 % der Gesamtdicke der Folie entspricht.

4. Verfahren gemäß Anspruch 3, **dadurch gekennzeichnet, dass** die Zwischenschicht eine Dicke aufweist, welche 50 % der Gesamtdicke der Folie darstellt, und aus LDPE zusammengesetzt ist.

5. Verfahren gemäß Anspruch 4, **dadurch gekennzeichnet, dass** die dritte Innenschicht aus 90 % LDPE und 10 % Wirkstoff zusammengesetzt ist.

6. Verfahren gemäß Anspruch 1, **dadurch gekennzeichnet, dass** die Einarbeitung eines antimikrobiellen Wirkstoffs durch Mischen in einem V-förmigen Mischer-Homogenisator erfolgt, nach dem Mischen des antimikrobiellen Wirkstoffs mit dem Pulver, das der Herstellung eines Masterbatches entspricht.

7. Verfahren gemäß Anspruch 6, **dadurch gekennzeichnet, dass** das Masterbatch mit Thymol als ein aktiver antibakterieller Wirkstoff hergestellt wird, wobei das pulverförmige Thymol in einem Bereich, welcher von 2,8 bis 15 % variiert, mit pulverförmigem linearen Polyethylen niedriger Dichte vermischt wird, wobei die Mischung extrudiert wird, bis das Masterbatch erhalten wird.

8. Verfahren gemäß Anspruch 7, **dadurch gekennzeichnet, dass** die Extrusionstemperatur ungefähr 170 °C beträgt.

9. Verfahren gemäß einem der Ansprüche 1, 6, 7 und 8, **dadurch gekennzeichnet, dass** in Schritt (a) das Masterbatch einen Gehalt von 10 % antimikrobiellem Wirkstoff aufweist, welches mit LDPE in unterschiedlichen Konzentrationen zwischen 0,5 und 15 % in einem Extruder vermischt wird.

## Revendications

1. Procédé d'obtention d'un film qui comprend l'incorporation d'agents antimicrobiens d'origine naturelle dans une structure polymère pour l'élaboration d'emballages conçus pour accroître la durée de vie au stockage de viande refroidie ou réfrigérée, préférablement de saumon refroidi frais, **CARACTÉRISÉ en ce que** ledit procédé comprend les étapes suivantes :
a) de mélange d'une première extrusion de l'agent actif antimicrobien avec une poudre de polyéthylène basse densité (LDPE) pour obtenir une pastille ;
b) de seconde extrusion pour obtenir un film incorporant la pastille obtenue dans l'étape (a) en une proportion de 10 % de pastilles de polyéthylène ;
c) de conduite d'une coextrusion tricouche pour élaborer le film dans lequel l'agent antimicrobien est incorporé, où l'agent actif antimicrobien est incorporé dans la couche formant film qui se trouve en contact direct avec le saumon, et les couches intermédiaire et externe du film, fournissent les exigences de structure de film, sans l'incorporation de l'agent actif.

2. Procédé selon la revendication 1, **CARACTÉRISÉ en ce que** l'agent antimicrobien incorporé dans l'étape (a) est le thymol.

3. Procédé selon la revendication 1 ou 2, **CARACTÉRISÉ en ce que** la couche externe est composée de LDPE et présente une épaisseur finale correspondant à 25 % de l'épaisseur totale du film.

4. Procédé selon la revendication 3, **CARACTÉRISÉ en ce que** la couche intermédiaire présente une épaisseur qui représente 50 % de l'épaisseur totale du film, et est composée de LDPE.

5. Procédé selon la revendication 4, **CARACTÉRISÉ en ce que** la troisième couche interne est composée de LDPE à 90 % et d'agent actif à 10 %.

6. Procédé selon la revendication 1, **CARACTÉRISÉ en ce que** l'incorporation d'un agent antimicrobien est effectuée par mélange dans un homogénéisateur mélangeur de type pant, après mélange de l'agent antimicrobien avec la poudre correspondant à l'élaboration du lot maître.

7. Procédé selon la revendication 6, **CARACTÉRISÉ en ce que** le lot maître est préparé avec du thymol comme agent antibactérien actif, où le thymol en poudre est mélangé dans une plage qui varie de 2,8 à 15 %, avec du polyéthylène basse densité linéaire pulvérulent, en extrudant le mélange jusqu'à ce que le lot maître soit obtenu.

8. Procédé selon la revendication 7, **CARACTÉRISÉ en ce que** la température d'extrusion est d'approximativement 170°C.

9. Procédé selon l'une quelconque des revendications 1, 6, 7 et 8, **CARACTÉRISÉ en ce que** dans l'étape (a) le lot maître présente une teneur de 10 % de l'agent antimicrobien, qui est mélangé avec le LDPE en concentrations différentes comprises entre 0,5 et 15 % dans une extrudeuse.
